# EUROPEAN PATENT APPLICATION

(11) **EP 4 395 230 A1**
(43) Date of publication of application: **03.07.2024**
(21) Application number: 21954960.7
(22) Date of filing: 23.08.2021
(51) Int. Cl.: H04L 9/32

(54) **DATA MANAGEMENT PROGRAM, DATA MANAGEMENT METHOD, DATA MANAGEMENT DEVICE, AND DATA MANAGEMENT SYSTEM**

(71) Applicant: Fujitsu Limited, Kawasaki-shi, Kanagawa 211-8588 (JP)
(72) Inventor: SAKAMOTO, Takuya, Kawasaki-shi, Kanagawa 211-8588 (JP); YAMAOKA, Mebae, Kawasaki-shi, Kanagawa 211-8588 (JP); FUKUOKA, Takeru, Kawasaki-shi, Kanagawa 211-8588 (JP)
(74) Representative: Hoffmann Eitle
(86) International application number: PCT/JP2021/030879
(87) International publication number: WO 2023/026343

(57) **Abstract**

When performing zero knowledge proof of a credential owned by a user, a data management apparatus (100) operated by the user discloses a commitment of a digital signature of the credential to a verifier server (102) (S1). Next, the management apparatus (100) requests the verifier server to verify a knowledge proof of the digital signature by using the commitment (S2). Then, the apparatus (100) transmits a plurality of digital signatures including the digital signatures corresponding to the credential owned by the user to the verifier server (102) by using again the commitment used in S2, and requests the verifier server (102) to verify the set membership proof in which one of the plurality of digital signatures is owned by the user (S3). Accordingly, when the same user verifies the credential a plurality of times, it is possible to prevent the same user from being identified and maintain unlinkability.

## Description

### TECHNICAL FIELD

The present embodiment relates to a data management program, a data management method, a data management apparatus, and a data management system.

### BACKGROUND ART

In recent years, a mechanism has been realized in which a user (owner/prover) owns an identity such as a name, an address, a date of birth, and a study history of the user confirmed by an authority (issuer), and the user discloses the identity to a third party (verifier) to obtain trust. The mechanism is referred to as a decentralized identity (DID) or a selfsovereign identity (SSI).

For example, in SSI, the issuer issues a credential such as a certificate with a digital signature that indicates a validity of the user's identity, and the user discloses the credential to the third party. The verifier may verify the validity of the identity (attribute information of the credential) by checking the digital signature of the credential with a public key of the issuer or the like.

Here, as a technique for disclosing and certifying only a part of the attribute information included in the credential for the purpose of protecting a privacy of the user, for example, Hyperledger Indy (trademark) which is an open source software for realizing an identity distribution is provided.

As a related art, for example, there is a technique in which a server receives an attribute of an entity, a public key, a digital signature of a third party, and information of a geographic jurisdiction, calculates a hash value, and stores proof data in a blockchain or the like corresponding to the geographic jurisdiction, thereby preventing forgery or the like of the proof data. In addition, there is a technique in which a credential handle attribute is included in a credential, the credential handle is incorporated into an accumulator of a falsification prevention log to issue the credential, and zero knowledge proof is performed to prove that the handle is included in the accumulator when the credential is used. In the zero knowledge proof technique, a verifier uses a commitment (e.g., equivalent to a hash value) of a digital signature disclosed by a user to verify the credential without disclosing information other than attribute information designated by the user.

### PRIOR ART DOCUMENT

### Patent Document

[Patent Document 1] Japanese Patent Application Laid-Open No. 2020-184774
[Patent Document 2] U.S. Patent Application Publication No. 2019/0020480

### SUMMARY OF INVENTION

### TECHNICAL PROBLEM

In the related technology, there is a problem that the credential may be freely created when a signature key of the issuer is leaked. To solve this problem, the trusted server stores the digital signature of the credential and the time stamp such as a reception date and time, and thus the credential having the time stamp and the digital signature before the leakage may be determined to be authentic as a valid credential issued before the leakage. However, in this case, if the same user accesses the same verifier a plurality of times, for example, twice, the verifier accesses the same digital signature and the same time stamp twice, and it is possible to specify (link) that the two accesses are made by the same user having the same signature (unlinkability is not satisfied). In this case, the privacy of the user may not be protected.

In one aspect, the present disclosure is directed to preventing the specification of the same user and maintaining the unlinkability when verifying the credentials which are made by the user a plurality of times.

### SOLUTION TO PROBLEM

According to an aspect of the present disclosure, a data management program for performing zero knowledge proof of a credential owned by a user causes a computer of the user to execute processes of: disclosing a commitment of a digital signature of the credential to a verifier server; requesting the verifier server to verify knowledge proof of the digital signature by using the commitment; transmitting a plurality of digital signatures including the digital signature of the credential owned by the user to the verifier server using the commitment; and requesting the verifier server to verify set membership proof in which one of the plurality of digital signatures is owned by the user.

### EFFECT OF INVENTION

According to an aspect of the present disclosure, an effect is generated in which it is possible to prevent from specifying the same user and maintain unlinkability when verifying, by the same user, credentials a plurality of times.

### BRIEF DESCRIPTION OF DRAWINGS

FIG. 1 is an explanatory diagram illustrating an example of a data management method according to an embodiment;
FIG. 2 is a block diagram illustrating functions of each apparatus of the data management system;
FIG. 3 is a diagram illustrating an example of a hardware configuration of a data management apparatus;
FIG. 4 is a sequence diagram illustrating an example of a process at the time of credential issuance.
Fig. 5A is a sequence diagram illustrating an example of a process at the time of credential verification (Part 1).
Fig. 5B is a sequence diagram illustrating the example of the process at the time of the credential verification (Part 2).
FIG. 6 is a sequence diagram illustrating an example of a process of proving set membership.
FIG. 7 is a diagram illustrating an example of a UI display of the data management apparatus;

### DESCRIPTION OF EMBODIMENTS

Hereinafter, embodiments of a data management program, a data management method, a data management apparatus, and a data management system will be described in detail with reference to the drawings.

### Example of Data Management Method According to Embodiment

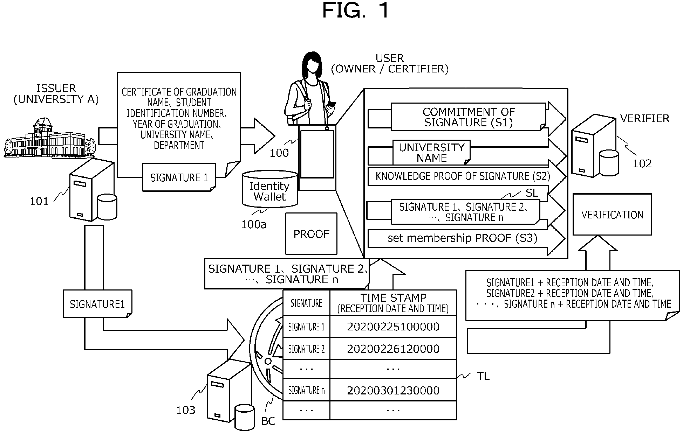

FIG. 1 is an explanatory diagram of an example of a data management method according to an embodiment. In the data management method according to the embodiment, a plurality of computers on a system perform a process for issuing and proving a credential (certificate) of a user (owner/prover).

An issuer server 101 that performs a credential issuance process is arranged in the issuer. The user owns a computer such as a smartphone as the data management apparatus 100 described in the embodiment, for example. The verifier is provided with a verifier server 102 for performing a verification process of the credential disclosed by the user. In addition, a signature server 103 is arranged which manages a digital signature of the credential issued by the issuer with time stamps.

For example, as illustrated in FIG. 1, the issuer is University A, which the user graduated. The data management apparatus 100 of the user acquires the credential issued by the issuer server 101 which is the issuer, and records and saves the acquired credential in a credential database (DB, for example, Identity Wallet) 100a. For example, when the credential acquired by the user is a certificate of graduation, the attribute information such as a user's name, a student identification number, a university name and a department is included in the credential. Further, the certificate of graduation also includes a digital signature 1 ("Signature 1" in FIG. 1) of the certificate of graduation assigned by the issuer server 101.

The issuer server 101 assigns the digital signature 1 to the credential (certificate of graduation) when the credential is issued. Further, the issuer server 101 transmits information of the digital signature 1 to the signature server 103.

The signature server 103 records and holds the digital signature 1 issued by the issuer server 101 and a time stamp of a reception date and time of the digital signature 1. The signature server 103 is arranged on, for example, a blockchain (BC). The signature server 103 records and holds information on digital signatures 1 to n received for each issuance of the credential including the case where the credential is issued to a plurality of users, and the time stamps of the digital signatures 1 to n. The signature server 103 accumulates and holds the information of the digital signature 1 and the time stamp issued by the issuer server 101 in addition to the information already recorded and held. Further, the signature server 103 may transmit a signature list SL including the plurality of digital signatures 1 to n to the data management apparatus 100 of the user. Further, the signature server 103 may transmit a time stamp list TL including the plurality of digital signatures 1 to n and the time stamps of the respective digital signatures 1 to n to the verifier server 102.

The data management apparatus 100 discloses some of the attribute information of the certificate of graduation, for example, the name of the university and the signature list SL including the plurality of digital signatures 1 to n, to the verifier server 102 of the verifier, and requests the verifier server 102 to verify proof information (commitment of digital signature). Here, the data management apparatus 100 transmits, to the verifier server 102 of the verifier, proof information created from the same digital signature for the knowledge proof of the digital signature and the set membership proof. These knowledge proof and set membership proof are a kind of zero knowledge proof.

The set membership proof performs the zero knowledge proof that one of the plurality of digital signatures 1 to n is the digital signature 1 corresponding to the content disclosed by the user, using the proof information.

The set membership proof is disclosed in, for example, Non-Patent Document 1. The use of the set membership proof in the embodiment will be described in detail later. (Non-Patent Document 1: "Efficient protocols for set membership and range proofs", J. Camenisch, R. Chaabouni, et al. one person, in Advances in Cryptology (Lecture Notes in Computer Science), vol. 5350. Heidelberg, Germany: Springer-Verlag, 2008, pp. 234 to 252.)

The verifier server 102 of the verifier verifies the attribute information disclosed by the data management apparatus 100 of the user. The verifier server 102 verifies the knowledge proof of the signature with respect to the commitment of the signature transmitted from the data management apparatus 100 and the attribute information disclosed by the user. Further, the verifier server 102 receives the signature list SL (digital signatures 1 to n) transmitted from the data management apparatus 100. Further, the verifier server 102 receives the time stamp list TL from the signature server 103, and verifies that the signature is created before a certain date and time based on the time stamp. Further, the verifier server 102 verifies the set membership proof transmitted from the data management apparatus 100. By each of the above-described verification processes, the verifier server 102 outputs verification result of the attribute information disclosed by the user. For example, the verification result is transmitted to the data management apparatus 100 of the user.

Here, the related problems will be described. For example, it is assumed that the issuer issues a credential including a plurality of pieces of attribute information such as the name, the student identification number, and the university name as the certificate of graduation to the user. In this case, the user discloses only the university name to the verifier and uses cryptographic technology zero knowledge proof. Thus, the prover may prove to the verifier that the user has the digital signature that may be signed with the public key of the issuer without disclosing the attribute information other than the university name, such as the name, and the digital signature.

In general, in the digital signature, it is necessary to disclose the digital signature itself, and, in addition, the digital signature may not be verified without all of original data to which the digital signature is assigned. By using the zero knowledge proof, a user may be proved without disclosing a part of the data and the digital signature itself. Since the user may be proved without disclosing the part of the data, unnecessary attribute information may be hidden, and the privacy of the user may be protected. Further, since the user does not need to disclose the digital signature itself, even if the user's attribute information is disclosed twice to the same verifier, it is possible to hide the fact that the first and second times are for the same user. In this regard, when the digital signature is disclosed, if the same digital signature is obtained twice, it is known that the user is the same user, and unlinkability may not be maintained.

Since the digital signature is used, if a secret key used for the digital signature is leaked, a person who has obtained the secret key may freely sign the digital signature and create an unauthorized credential. As a countermeasure against this point, there is a mechanism for revoking a key, and the above-described Hyperledger Indy is also provided with a function of revoking a key. However, if revoked, the validity of the credential may not be proved thereafter. For example, when the management of the secret key becomes uncertain due to a bankruptcy of an organization that has been the issuer, the issuer may not reissue the credential. In this regard, the identity should be continuously available throughout the user's lifecycle, and the inability to be verified in the middle is problematic.

As a simple method for solving the above problem, it is conceivable to store, in a signature server or the like, verification information for verifying that a credential has been issued in an area accessible by a verifier with a time stamp when the credential is issued. Here, the time stamp is given by the signature server, not by the issuer, so that the information is not registered with a past time stamp. Examples of the verification information include a hash value of the credential. a digital signature of the credential or the like. The verifier acquires the verification information stored in the signature server at the time of verification, and, thus, acquires the date and time when the attribute information disclosed by the user is issued based on the time stamp. Then, the verifier may verify that the credential is not fraudulent by checking the validity of the time stamp. For example, validity verification using the time stamp may cope with a case where the secret key is leaked, and an unauthorized person creates an unauthorized credential using the secret key. Since the verification information for verifying that the credential has been issued may not be stored with a past time stamp before the leakage, the verifier may correctly verify the credential based on the time stamp.

However, this method also has a problem. Since the verifier accesses the verification information such as the hash value and the digital signature of the credential, for example, when the same user discloses the attribute information to the same verifier twice, the verifier knows that the two disclosures are made by the same user. This is because the verifier accesses the same digital signature and time stamp twice. As a result, unlinkability may not be maintained.

In the embodiment, in order to solve such a conventional problem, the data management apparatus 100 uses the same commitment of the digital signature for two proofs (the zero knowledge proof and the set membership proof).

The data management apparatus 100 of the user illustrated in FIG. 1 performs the following processes (1) to (3).
(1) The data management apparatus 100 discloses a commitment (for example, a hash value) of a digital signature to the verifier server 102 (S1).
(2) Next, the data management apparatus 100 does not disclose attribute information other than specified attribute information and the digital signature, transmits the attribute information specified by the user (university name) and the commitment of the signature, and requests the zero knowledge proof (knowledge proof of the signature), to the verifier server 102 (S2).
(3) Next, the data management apparatus 100 transmits the signature list SL (a plurality of digital signatures 1 to n) to the verifier server 102, and requests the set membership proof to the verifier server 200 (S3). Accordingly, the verifier server 102 acquires the digital signatures 1 to n of the signature list SL and the respective time stamps from the signature server 103, and performs the set membership proof for the attribute information (university name) specified by the user. At this time, the verifier server 102 verifies that one of the signature list SL (the plurality of digital signatures 1 to n) is the original data (digital signature 1) of the commitment of the signature presented by the user.

In the above process, the data management apparatus 100 uses the commitment of the same digital signature for two zero knowledge proofs (knowledge proof of a signature and set membership proof). Thus, the verifier verifies that the user possesses the credential that guarantees the attribute information disclosed by the user and the digital signature 1, and then determines that the verification is successful if the digital signature 1 matches any of the digital signatures 1 to n stored in the signature server 103. According to this process, the user may generate a state where whether the digital signature 1 of the user is any one of the plurality of digital signatures 1 to n transmitted to the verifier is not specified.

Thus, it is assumed that the same user (the data management apparatus 100) discloses the attribute information (for example, the university name) of the same credential a plurality of times, for example, twice, and requests verification of the proof. In this case, the verifier server 102 cannot identify whether the requests performed twice are performed by the same user, and may maintain unlinkability.

### (Functional Configuration Example of Each Apparatus of Data Management System)

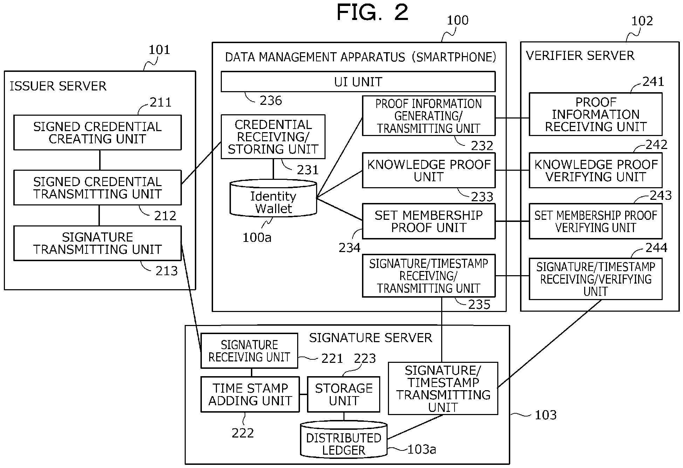

FIG. 2 is a block diagram illustrating functions of the respective apparatuses of the data management system. The issuer server 101 arranged corresponding to the issuer includes a signed credential creating unit 211, a signed credential transmitting unit 212, and a signature transmitting unit 213.

The signed credential creating unit 211 creates a credential (certificate) including attribute information of a user in response to a user request. The signed credential creating unit 211 attaches a digital signature to the credential using a secret key of an issuer. The signed credential transmitting unit 212 transmits the issued credential with the signature to the data management apparatus 100 (for example, a smartphone) of the user. The signature transmitting unit 213 transmits only the digital signature of the created credential with the signature to the signature server 103 in accordance with the transmission of the credential with the signature to the user.

The signature server 103 is configured by a server apparatus that may access a signature DB (for example, a distributed ledger on a block chain (BC)) 103a. The signature server 103 includes a signature receiving unit 221, a timestamp adding unit 222, a storage unit 223, and a signature/timestamp transmitting unit 224.

The signature receiving unit 221 receives the digital signature transmitted from the issuer server 101. The time stamp adding unit 222 adds a reception time of the received digital signature to the digital signature as a time stamp. The storage unit 223 stores the digital signature with the time stamp in the distributed ledger 103a. Thus, the signature server 103 accumulates and stores the digital signature with the time stamp in the distributed ledger 103a each time the digital signature is received in accordance with an issuance of the credential by the issuer server 101.

In order to enable a disclosure of the digital signature to various verifiers, it is desirable that anyone may access the signature server 103. For example, the information of the digital signature stored in the signature server 103 is information serving as a base of trust (a basis of trust) when a serious situation such as leakage of the secret key of the issuer occurs. The information stored in the signature server 103 may be information-managed in a form of a consortium chain in which a plurality of organizations form a consortium or in a form of a blockchain in which anyone can participate, in order to prevent fraud due to falsification or the like, and thus reliability may be improved. Note that instead of the issuer transmitting the digital signature to the signature server 103, the user (the data management apparatus 100) may transmit the digital signature of the received credential to the signature server 103.

The data management apparatus 100 is, for example, a smartphone carried by a user or the like. The data management apparatus 100 includes a credential receiving/storing unit 231, a credential DB 100a, a proof information generating/transmitting unit 232, and a knowledge proof unit 233. Further, the data management apparatus 100 includes a set membership proof unit 234, a signature/time stamp receiving/transmitting unit 235, and a UI unit 236.

The credential receiving/storing unit 231 stores the credential with the digital signature in the credential DB (Identity Wallet) 100a every time the credential with the digital signature issued by the issuer server 101 is received.

The proof information generating/transmitting unit 232 reads out the credential stored in the credential DB 100a, generates proof information for requesting the verifier server 102 to prove the credential of the user, and transmits the proof information to the verifier server 102. The proof information is a commitment of the digital signature and a part of attribute information (for example, a university name of a certificate of graduation) specified by the user among a plurality of pieces of attribute information of the credential.

The knowledge proof unit 233 proves that the user has the digital signature of the credential corresponding to the attribute information transmitted by the proof information generating/transmitting unit 232. The knowledge proof unit 233 accesses the verifier server 102 (a knowledge proof verifying unit 242) and receives the verification result. For example, the knowledge proof by the knowledge proof unit 233 may be realized by using a method called a CL signature as the digital signature.

The CL signature is disclosed in, for example, Non-Patent Document 2. (Non-Patent Document 2: "A Signature Scheme with Efficient Protocols", Jan Camenisch, et al. one person, SCN2002, LNCS2576, pp. 268 to 289, 2003, Springer-Verlag Berlin Heidelberg 2003)

In the knowledge proof using the CL signature, by making a part of the signature a Pederson commitment, it is possible to prove that the user has the signature without passing plain text data to the verifier server 102, and this is used in the above-mentioned Hyperledger Indy.

The signature/timestamp receiving/transmitting unit 235 receives, from the signature server 103, a plurality of digital signatures 1 to n having a timestamp earlier than a leakage date and time of the secret key of the issuer. For example, when the user specifies a date and time on the data management apparatus 100, the signature/timestamp receiving/transmitting unit 235 requests a digital signature corresponding to the specified date and time to the signature server 103, and acquires a plurality of digital signatures 1 to n in response to a response from the signature server 103. The signature/timestamp receiving/transmitting unit 235 records and holds the acquired digital signatures 1 to n with the timestamps in the storage unit. Further, the signature/timestamp receiving/transmitting unit 235 may transmit the digital signatures 1 to n with the timestamps to the verifier server 102.

One of the plurality of digital signatures 1 to n (for example, the digital signature 1) acquired by the signature/timestamp receiving/transmitting unit 235 needs to correspond to the digital signature of the credential to be proved. The other plurality of digital signatures 2 to n other than the digital signature 1 may be digital signatures of the user's own credentials or digital signatures of credentials of other users. The more the signature/timestamp receiving/transmitting unit 235 acquires the digital signature, the lower the possibility of identifying the user corresponding to the digital signature being proved.

The set membership proof unit 234 proves that one of the plurality of digital signatures 1 to n acquired by the signature/timestamp receiving/transmitting unit 235 is the digital signature (the digital signature 1) corresponding to the commitment of the signature disclosed by the user. The set membership proof unit 234 accesses the verifier server 102 (a set membership proof verifying unit 243) and requests verification using the set membership proof (for example, disclosed in Non-Patent Document 1).

In the embodiment, as may be proved by the set membership proof indicated in Non-Patent Document 1, the Pederson commitment or a set of certain values is shared in advance between the data management apparatus 100 of the user and the verifier server 102. The verifier server 102 (the set membership proof verifying unit 243) verifies that the original value of the Pederson commitment is included in the Pederson commitment or the set of the certain values. Note that when performing the verification, an interactive protocol such as the verifier server 102 generating a random number is provided. The details of a process of the set membership proof will be described later.

The UI unit 236 includes a touch pad or the like for performing a user operation and a display of a data process on the data management apparatus 100. The UI unit 236 presents the data process of each functional unit (the credential receiving/storing unit 231 to the signature/timestamp receiving/transmitting unit 235) of the data management apparatus 100 to the user by a screen display or the like based on a user operation.

The verifier server 102 includes a proof information receiving unit 241, the knowledge proof verifying unit 242, the set membership proof verifying unit 243, and a signature/timestamp receiving/verifying unit 244.

The proof information receiving unit 241 receives proof information used for proving the credential of the user, which is transmitted from the data management apparatus 100 (the proof information generating/transmitting unit 232) of the user. The proof information is a commitment of the digital signature and a part of attribute information (for example, a university name of a certificate of graduation) specified by the user among a plurality of pieces of attribute information of the credential.

The knowledge proof verifying unit 242 verifies whether the user has the digital signature of the credential corresponding to the attribute information transmitted by the proof information generating/transmitting unit 232, based on the request for verification of the knowledge proof by the data management apparatus 100 (the knowledge proof unit 233). The knowledge proof verifying unit 242 returns the verification result of the knowledge proof to the data management apparatus 100 (the knowledge proof unit 233).

The set membership proof verifying unit 243 verifies the set membership proof based on the request for verification of the set membership proof by the data management apparatus 100 (the set membership proof unit 234). The signature/timestamp receiving/verifying unit 244 receives the plurality of digital signatures 1 to n and the timestamp list TL including the timestamp of each of the digital signatures 1 to n transmitted by signature/timestamp receiving/transmitting unit 235 of the data management apparatus 100. The signature/time stamp receiving/verifying unit 244 verifies the validity of the timestamp of each of the digital signatures 1 to n, and outputs the verification result to the set membership proof verifying unit 243.

Then, the set membership proof verifying unit 243 verifies whether or not one of the plurality of digital signatures 1 to n is the digital signature (digital signature 1) corresponding to the commitment of the signature disclosed by the user. At this time, the set membership proof verifying unit 243 verifies that the credential is not invalid by checking whether the verification result of the time stamp of the digital signature by the signature/timestamp receiving/verifying unit 244 is valid. For example, the set membership proof verifying unit 243 determines that the time stamp is valid if the date of the time stamp of the digital signature is issued on the date before the secret key is leaked. The set membership proof verifying unit 243 returns the verification result of the set membership proof to the data management apparatus 100 (set membership proof unit 234) .

### (Hardware Configuration Example of Data Management Apparatus)

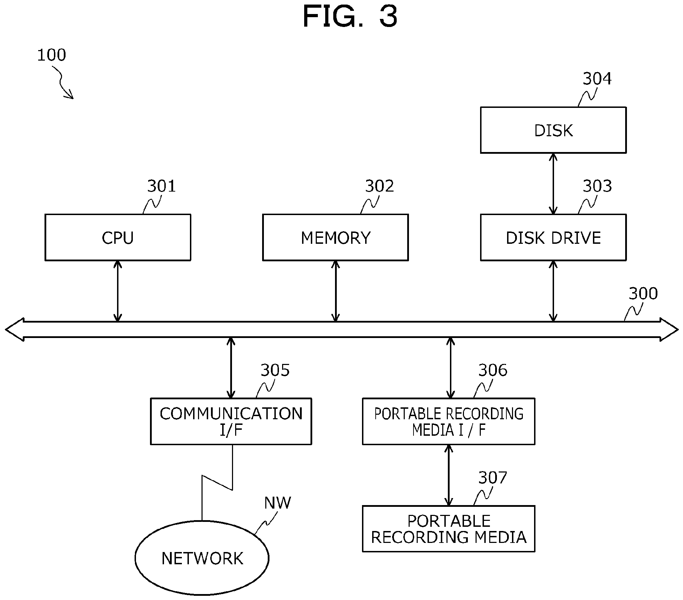

FIG. 3 is a diagram illustrating an example of a hardware configuration of the data management apparatus. The data management apparatus 100 may be configured by a computer including general-purpose hardware illustrated in FIG. 3.

The data management apparatus 100 includes a central processing unit (CPU) 301, a memory 302, a disk drive 303, and a disk 304. Further, the data management apparatus 100 further includes a communication interface (I/F) 305, a portable recording media I/F 306, and a portable recording media 307. Further, each of the components is coupled to each other via a bus 300.

Here, the CPU 301 controls the entire of the data management apparatus 100. The CPU 301 may have a plurality of cores. The memory 302 includes, for example, a Read Only Memory (ROM), a Random Access Memory (RAM), a flash ROM, and the like. For example, the flash ROM stores an OS program, the ROM stores an application program, and the RAM is used as a work area of the CPU 301. The program stored in the memory 302 is loaded into the CPU 301, and thereby causes the CPU 301 to execute coded processes.

The disk drive 303 controls read/write of date from/to the disk 304 under the control of the CPU 301. The disk 304 stores data written under the control of the disk drive 303. The disk 304 may be, for example, a magnetic disk, an optical disk or the like.

The communication I/F 305 is coupled to a network NW through a communication line and is coupled to an external computer via the network NW. The external computer is, for example, the issuer server 101, the verifier server 102, or the signature server 103 illustrated in FIG. 2. Further, the communication I/F 305 is an interface between the network NW and the inside of the apparatus, and controls data transmission from and to the external computer. For example, a modem or a LAN adapter may be used as the communication I/F 305.

The portable recording media I/F 306 controls read/write of data with respect to the portable recording media 307 under the control of the CPU 301. The portable recording media 307 stores the date written by the control of the portable recording media I/F 306. Examples of the portable recording medium 307 include a Compact Disc (CD) - ROM, a Digital Versatile Disk (DVD), a Universal Serial Bus (USB) memory or the like.

Note that the data management apparatus 100 may include, for example, an input device, a display or the like in addition to the above-described components. For example, when the data management apparatus 100 is a smartphone, the data management apparatus 100 may include a touch panel for input and display.

The memory 302, the disk 304, and the portable recording media 307 illustrated in FIG. 3 record and hold, for example, information such as the credential DB 100a and the signature list SL illustrated in FIG. 1.

Further, the issuer server 101, the verifier server 102, and the signature server 103 illustrated in FIG. 1 may also be configured by the same hardware as that illustrated in FIG. 3. In this case, for example, various DBs such as a user information DB in which the issuer server 101 records and holds user information may be configured using the memory 302, the disk 304, and the portable recording medium 307 illustrated in FIG. 3. Further, the various DBs included in the verifier server 102 may be configured using the memory 302, the disk 304, and the portable recording medium 307 illustrated in FIG. 3. Further, when the signature server 103 has a signature DB 103a, various DBs such as this signature g DB 103a may be configured using the memory 302, the disk 304, and the portable recording media 307 illustrated in FIG. 3. In addition, when the distributed ledger on the block chain is provided with the function of the signature DB 103a, the distributed ledger on the block chain may be configured using the memory 302, the disk 304, and the portable recording media 307 illustrated in FIG. 3.

### (Process Example at Time of Credential Issuance)

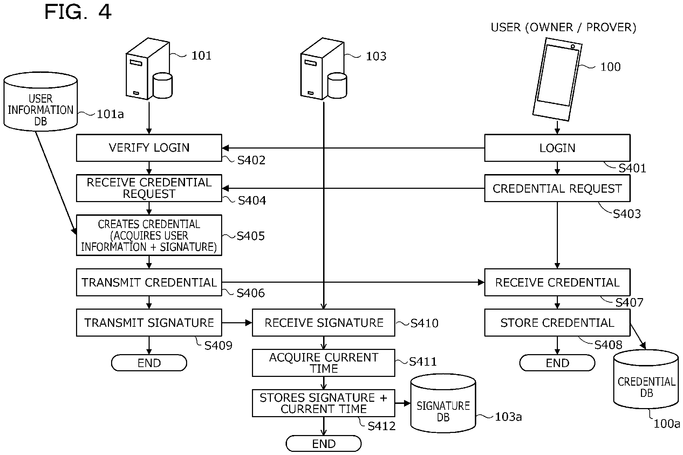

FIG. 4 is a sequence diagram illustrating an example of a process performed when a credential is issued. An example of process at the time of credential issuance will be described with reference to FIG. 4. When a credential is issued, the data process is performed among the data management apparatus 100 of the user, the issuer server 101, and the signature server 103.

First, a user accesses a service of the issuer server 101 using an application installed in the data management apparatus 100 such as a smartphone, and logs in (step S401). The issuer server 101 verifies the login of the user (step S402), and, if the verification result is that the user is a legitimate user, provides various services to the user.

Next, the data management apparatus 100 calls a credential issuance function existing in the service provided by the issuer server 101, and makes a credential request (for example, a request to issue the above-described certificate of graduation) for the user (step S403). When the credential request is received (step S404), the issuing server 101 refers to the user information DB 101a and creates the credential of the corresponding user (step S405).

At this time, the issuer server 101 refers to the user information DB 101a based on a user identifier (ID) used for the login, and creates a credential including values of attribute information of the user (for example, name, student identification number, year of graduation, university name, and department). Further, the issuer server 101 also attaches, to the created credential, a digital signature using a private key of the issuer. Then, the issuer server 101 transmits the credential with the digital signature to the data management apparatus 100 (step S406).

The data management apparatus 100 receives the credential with the digital signature transmitted by the issuer server 101 (step S407), and stores the received credential in the credential DB 100a (Identity Wallet) (step S408).

After the issuer server 101 transmits the credential with the digital signature to the user by executing step S406, the issuer server 101 transmits the digital signature of the issued credential to the signature server 103 (step S409).

When the signature server 103 receives the digital signature (step S410), the signature server 103 acquires a current time at which the digital signature is received (step S411), and stores the current time as a time stamp in the signature DB 103a in association with the digital signature (step S412). The signature DB 103a corresponds to the distributed ledger described in FIG. 1.

The signature server 103 receives the digital signature from the issuer server 101 each time the credential is issued, and then gives the time stamp to this digital signature and accumulates and stores the digital signature (corresponding to the time stamp list TL).

### (Process Example at Time of Verification of Credential)

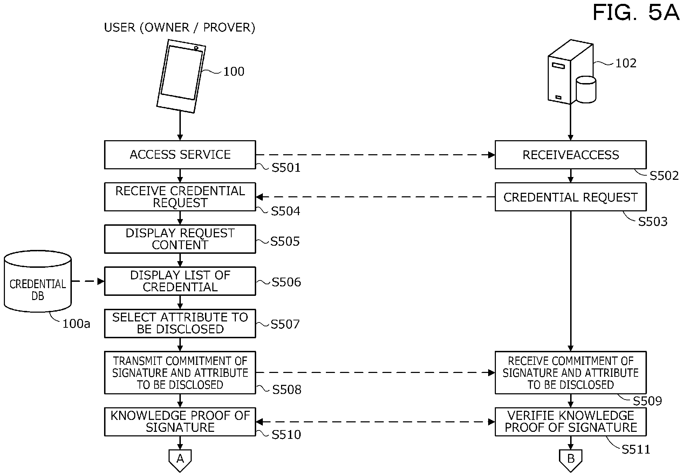

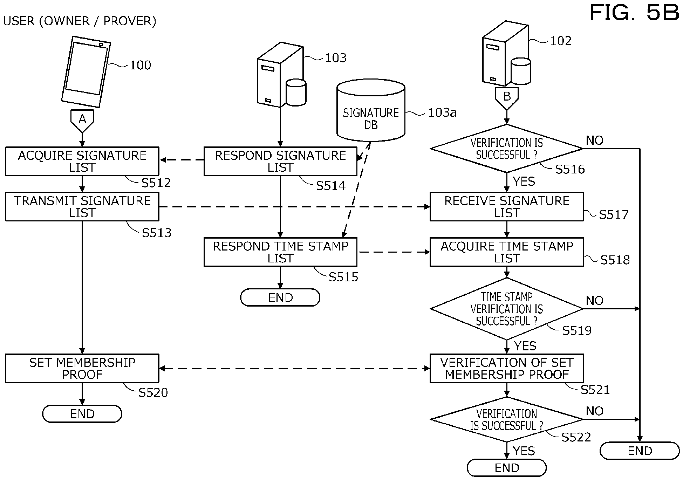

FIGS. 5A and 5B are sequence diagrams illustrating an example of a process at the time of the credential verification. An example of process at the time of the credential verification will be described with reference to FIGS. 5A and 5B. At the time of the credential verification, the data process is performed among the data management apparatus 100 of the user, the verifier server 102, and the signature server 103.

First, the user illustrated in FIG. 5A accesses the service of the verifier server 102 using the application installed in the data-management apparatus 100 (step S501). Upon receiving an access from the user (step S502), the verifier server 102 requests the data management apparatus 100 to disclose the credential (step S503).

Upon receiving the request for disclosing the requested credential from the verifier server 102 (step S504), the data management apparatus 100 displays the disclosed request content to the user (step S505). The data management apparatus 100 reads the credential owned by the user from the credential DB 100a and displays a list of the credential (step S506). The data management apparatus 100 selects attribute information of the credential to be disclosed from the displayed list of credential by a user operation (step S507).

Thus, the data management apparatus 100 creates proof information (commitment of the digital signature) from the digital signature of the credential selected by the user. Then, the data management apparatus 100 transmits the commitment of the digital signature and the attribute information of the credential selected by the user to the verifier server 102 (step S508) .

The verifier server 102 receives the commitment of the digital signature and the attribute information of the credential disclosed by the user (step S509). Then, the data management apparatus 100 proves that the user has the digital signature of the credential having the transmitted attribute information (knowledge proof of digital signature, step S510). At the time of this knowledge proof, the verifier server 102 verifies whether the user has the digital signature of the credential having the attribute information transmitted by the data management apparatus 100 (step S511), and returns the verification result to the data management apparatus 100.

Next, as illustrated in FIG. 5B, the data management apparatus 100 acquires the signature list SL from the signature server 103 (step S512), and transmits the acquired signature list to the verifier server 102 (step S513).

The signature server 103 refers to the signature DB 103a in response to an acquisition the request from the data management apparatus 100, responds the corresponding signature list SL to the data management apparatus 100 (step S514), and proceeds to the process of step S151. The data management apparatus 100 acquires the signature list SL including a plurality of digital signatures from the signature server 103. At this time, for example, the user specifies and inputs a date and time before a leakage date and time of the secret key of the issuer to the data management apparatus 100, and requests the signature server 103. The signature server 103 returns a signature list SL of a plurality of digital signatures 1 to n having a time stamp earlier than the leakage date and time of the secret key of the issuer.

Here, one of the plurality of digital signatures 1 to n (for example, the digital signature 1) included in the signature list SL acquired by the data management apparatus 100 needs to correspond to the digital signature of the credential to be proved. Therefore, the signature server 103 includes the digital signature 1 of the user as the signature list SL, and causes the other plurality of digital signatures 2 to n other than the digital signature 1 to include the digital signature of the credential of the user's own or the digital signature of the credential of another user.

After responding to the signature list SL in step S514, the signature server 103 responds and outputs the time stamp list TL corresponding to the responded signature list SL to the verifier server 102 (step S515), and the above process is terminated. The time stamp list TL includes the plurality of digital signatures 1 to n of the signature list SL and the time stamps at which each of the digital signatures 1 to n is received from the issuer server 101.

The verifier server 102 determines the verification result of the knowledge proof of the digital signature in step S511 (step S516). According to the verification result, when determining that the user possesses the digital signature of the credential having the attribute information transmitted by the user (the data management device apparatus 100), the verification is successful (step S516: Yes), and the verifier server 200 proceeds to the process in step S517 and subsequent steps. On the other hand, according to the verification result, if the verifier server 102 determines that the user does not possess the digital signature of the credential having the attribute information transmitted by the user (the data management device apparatus 100), the verification fails (step S516: No), and the verifier server 200 ends the above processing.

In step S517, the verifier server 102 receives the signature list SL transmitted from the data management apparatus 100 (step S517). Next, the verifier server 102 acquires the time stamp list TL transmitted from the signing server 103 (step S518).

Next, the verifier server 102 verifies the time stamps of the acquired time stamp list TL (step S519). Here, the verifier server 102 verifies whether the time stamp included in the time stamp list TL is earlier than the time at which the secret key has been leaked. As a result of the verification, if the time stamps of all the digital signatures 1 to n included in the time stamp list TL are earlier than the time at which the secret key has been leaked, the time stamp verification is successful (step S519: Yes), and the verifier server 102 proceeds to the process of step S521. On the other hand, if any of the time stamps of the digital signatures 1 to n included in the time stamp list TL is not earlier than the time at which the secret key has been leaked, the time stamp verification has failed (step S519: No), and the verifier server 102 ends the above process.

After the process of step S513, the data management apparatus 100 performs a process of the set membership proof (step S520). After the process of step S519, the verifier server 102 performs the process of the verification of the set membership proof (step S521). The verification of the set membership certificate will be described in detail later.

The verifier server 102 performs the verification of the set membership proof (step S522), notifies the data management apparatus 100 of each user of the result of the verification success (step S522: Yes) and the verification failure (step S522: No), and ends the process.

### (Processing Example of Set Membership Proof and Verification)

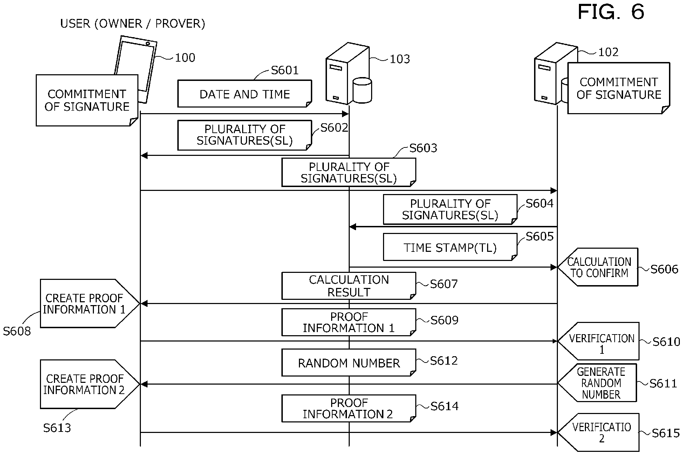

FIG. 6 is a sequence diagram illustrating an example of a process of the set membership proof. An example of the set membership proof and verification process will be described with reference to FIG. 6. The process of FIG. 6 corresponds to the process of steps S512 to S522 of FIG. 5B. In the set membership proof and verification, data process is performed among the data management apparatus 100 of the user, the verifier server 102, and the signature server 103.

In the set membership proof and verification, a Pederson commitment or a set of certain values is shared in advance between the data management apparatus 100 of the user and the verifier server 102. The verifier server 102 verifies that the Pederson commitment or the set of certain values includes an original value of the Pederson commitment.

The process of steps S601 to S606 in FIG. 6 is equivalent to the process of steps S512 to S519 in FIG. 5B. First, the data management apparatus 100 specifies a date and time (step S601), and acquires a signature list SL of the specified date and time from the signature server 103 (step S602). The specified date and time is a date and time before the time when the secret key is leaked similarly to the above. Further, the data management apparatus 100 transmits the acquired signature list SL to the verifier server 102 (step S603).

The verifier server 102 accesses the signature server 103, transmits information of the signature list SL (step S604), and acquires the time stamp list TL corresponding to the signature list SL from the signature server 103 (step S605). Then, the verifier server 102 performs a calculation to confirm that the time stamps of the plurality of digital signatures 1 to n included in the time stamp list TL are earlier than the time at which the secret key has been leaked (step S606). The verifier server 102 transmits a calculation result of the confirmation to the data-management apparatus 100 (step S607).

The data management apparatus 100 performs a process of creating proof information 1 based on the calculation result to confirm the time stamps in the verifier server 102 (step S608), and transmits the proof information 1 to the verifier server 102 (step S609). As described above, the proof information 1 includes the commitment of the digital signature and a part of the attribute information (for example, the name of the university of the certificate of graduation) specified by the user among a plurality of pieces of attribute information of the credential.

The verifier server 102 verifies the set membership proof by performing verification based on the received proof information 1 and verification based on proof information 2 using a random number (steps S610, S611, and S615).

For example, the verifier server 102 generates the random number (step S611), and transmits the generated random number to the data management apparatus 100 (step S612). The data management apparatus 100 performs a process of creating the proof information 2 using the received random number (step S613), and transmits the proof information 2 to the verifier server 102 (step S614).

The verifier server 102 verifies the set membership proof based on the received proof information 2 (step S615).

By the above-described process, the verifier server 102 may verify that the digital signature proved by the knowledge proof is stored in the signature server 103 and the time stamp is appropriate. Then, by the above-described process, it may be proved and verified, while maintaining unlinkability, that the attribute information disclosed by the user is attribute information that may be confirmed by the digital signature issued before the specified date and time, and the credential issued in the past is authentic.

### (UI Display Example of Data Management Apparatus 100)

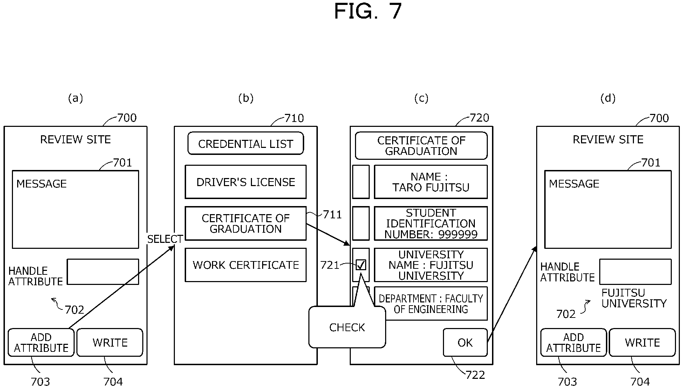

FIG. 7 is a diagram illustrating an example of a UI display of the data management apparatus. Specific examples of a screen display presented to the user by the application of the management apparatus 100 and user operations at the time of credential proof (FIGS. 5A to 6) will be described with reference to FIG. 7.

FIG. 7 illustrates an example in which the user discloses his/her own attribute information to increase the reliability of a message when writing the message of a review on a certain review site. The review site corresponds to the above-described verifier.

(a) in FIG. 7 illustrates a review screen 700 of the review site accessed by the user. The review screen 700 displays a message area 701 for describing a review content, a handle attribute 702, an "add attribute" button 703, and a "write" button 704 for confirming the writing of a review.

When the user presses the "add attribute" button 703 on the review screen 700, the data management apparatus 100 displays a credential list screen 710 on which the credentials held in the credential DB 100a are listed as illustrated in (b) of FIG. 7. In the example of the credential list screen 710, a driver's license, a certificate of graduation, and a work certificate are displayed as the credentials owned by the data management apparatus 100.

Next, the user selects a credential to be disclosed on the review site on the credential list screen 710. When the user selects a certificate of graduation button 711 as illustrated in (b) of FIG. 7, the data management apparatus 100 displays an attribute information list screen 720 listing a plurality of pieces of attribute information included in the selected credential "certificate of graduation" as illustrated in (c) of FIG. 7. The data management apparatus 100 displays, as the attribute information list screen 720, information (values) such as a name, a student identification number, a university name, and a department as the plurality of pieces of attribute information included in the credential of "certificate of graduation", and an "OK button" 722 for confirming an attribute selection by the user.

Next, the user selects attribute information of the credential to be disclosed on the review site from the attribute information list screen 720. As illustrated in (c) of FIG. 7, it is assumed that the user selects a check box 721 of the attribute information "university name" and selects the "OK button" 722. In this way, the data management apparatus 100 discloses the attribute information "university name" selected by the user to the verifier (review site). The verifier performs the verification process (FIGS. 5A to 6) of the proof of the above-described credential for the attribute information "university name" disclosed by the user.

Then, when the verifier (review site) succeeds in verifying the proof of the credential of the user, the verifier notifies the data management apparatus 100 of a success of the verification, and the data management apparatus 100 displays the review screen 700 illustrated in (d) of FIG. 7 again. At this time, the data management apparatus 100 displays the verified attribute information "university name" of the user in an area of the handle attribute 702 on the review screen 700. As a result, the message area 701 of the content posted by the user is displayed on the review site, and the attribute information "university name" of the user who has posted the message is also displayed together.

This allows another user who has viewed the message on the review site to determine what kind of person (user) who has posted the message based on the attribute information. Then, in the review site, the reliability of the review site may be improved based on the fact that the user who has posted the message is a person who has the verified credential.

Note that it is desirable that the attribute information disclosed to the verifier server 102 by the user is attribute information that may not identify the user, for example, attribute information other than the user name, address, telephone number, and the like. Further, a number of attribute information disclosed by the user is not limited to one, and may be two or more.

In a data management program for performing the zero knowledge proof of a credential owned by the user, the data management apparatus 100 of the embodiment described above discloses a commitment of a digital signature of the credential to a verifier server, requests the verifier server to verify the knowledge proof of the digital signature using the commitment, transmits a plurality of digital signatures including a digital signature corresponding to the credential owned by the user to the verifier server using the commitment, and requests the verifier server to verify the set membership proof in which one of the plurality of digital signatures is owned by the user. In this way, the data management apparatus 100 uses the commitment created from the digital signature in two zero knowledge proofs, for example, the knowledge proof and the set membership proof. Thus, even if the data management device 100 discloses the same credential to the verifier server a plurality of times, the verifier server side may not identify the same user, and the data management device 100 may perform the zero knowledge proof while maintaining unlinkability.

Further, the process of disclosing by the data management apparatus 100 includes a process of disclosing the attribute information that may not identify the user among a plurality of pieces of attribute information of the credential to the verifier server. Thus, the data management apparatus 100 may perform the zero knowledge proof based on the attribute information while disabling the verifier server side to identify the user.

Further, the process of requesting the verifier server to verify the set membership proof by the data management apparatus 100 includes a process of transmitting the plurality of digital signatures including the digital signature corresponding to the credential owned by the user and a time stamps at the time of issuing the plurality of digital signatures to the verifier server using the commitment, and requesting the verifier server to verify the set membership proof based on the plurality of digital signatures and the time stamps. Thus, the data management apparatus 100 may perform the zero knowledge proof based on the attribute information while disabling the verifier server side to identify the user based on the plurality of digital signatures and the time stamps. In addition, the validity of the digital signature may be verified based on the time stamps together. For example, the verification result that the digital signature is valid may be obtained based on the fact that the date and time of the time stamps is before the leakage date and time of the signature key for generating the digital signature.

Further, the process of requesting the verifier server to verify the set membership proof by the data management device 100 includes a process of acquiring the plurality of digital signatures including the digital signature corresponding to the credential owned by the user and the time stamps from the plurality of digital signatures accumulated by the signature server or the blockchain each time the credential is issued. Thus, the data management apparatus 100 may transmit the plurality of digital signatures acquired from the signature server or the blockchain to the verifier server as the plurality of digital signatures including the digital signature corresponding to the credential owned by the user and the time stamps, and may request the verifier server to verify the set membership proof.

Further, the data management apparatus 100 also includes, in the disclosure processing, a process of displaying information of the plurality of credentials possessed by the user, displaying the plurality of pieces of attribute information of the credential selected by the user from the displayed information of the plurality of credentials, and disclosing attribute information which may not identify the user himself/herself selected by the user from the displayed plurality of pieces of attribute information to the verifier server. This allows the user to perform the zero knowledge proof of the digital signature while disclosing the attribute information that may not specify the user among the plurality of pieces of attribute information of the credential.

From these facts, according to the embodiment, one commitment created from the digital signature is used for two proofs, for example, the knowledge proof and the set membership. Thus, even if the secret key of the issuer of the credential is leaked, the user may disclose the attribute information to the verifier and perform the zero proof by using the credential issued before the leakage. Further, even if the same verifier is requested to disclose and verify some attribute information a plurality of times using the same credential, the verifier side may not identify that the user who has disclosed the attribute information a plurality of times is the same user, and unlinkability may be maintained. In this regard, the embodiment has a unique effect that may not be achieved by the proof by the simple time stamp service by the existing technology.

The data management method described in the embodiment of the present disclosure may be realized by causing a processor such as a server to execute a program prepared in advance. The present method is recorded in a computer-readable recording medium such as a hard disk, a flexible disk, a Compact Disc-Read Only Memory (CD-ROM), a Digital Versatile Disk (DVD), or a flash memory, and is executed by being read from the recording medium by a computer. Further, the method may also be distributed over a network such as the Internet.

### DESCRIPTION OF SYMBOLS

100 data management device
101 issuer server
101a user information database (DB)
102 verifier server
103: signature server
103a distributed ledger
211 signed credential creating unit
212 signed credential transmitting unit
213: signature transmitting unit
221: signature receiving unit
222 timestamp adding unit
223 storage unit
224 signature/timestamp transmitting unit
231 credential receiving/storing unit
232 proof information generating/transmitting unit
233 knowledge proof unit
234 set membership proof unit
235 signature/timestamp receiving/transmitting unit
236 UI unit
241 proof information receiving unit
242 knowledge proof verifying unit
243 set membership proof verifying unit
244 signature/timestamp receiving/verifying unit
301 CPU
302 memory
304 disk
305 communication I/F
307 portable recording medium
700 review screen
710 credential list screen
720: attribute information list screen
NW network
SL signature list
TL timestamp list

## Claims

1. A data management program for performing a zero knowledge proof of a credential owned by a user causing a computer to execute:
disclosing a commitment of a digital signature of the credential to a verifier server;
requesting the verifier server to verify a knowledge proof of the digital signature using the commitment;
transmitting, to the verifier server, a plurality of digital signatures including the digital signature of the credential; and
requesting the verifier server to verify a set membership proof in which one of the plurality of digital signatures is owned by the user.

2. The data management program according to claim 1, wherein
the disclosing includes: disclosing attribute information that does not identify the user from among a plurality of pieces of attribute information of the credential to the verifier server.

3. The data management program according to claim 1 or 2, wherein
the requesting the verifier server to verify a set membership proof includes:
transmitting, using the commitment, the plurality of digital signatures and timestamps at a time of an issuance of the plurality of digital signatures to the verifier server; and
requesting the verifier server to verify the set membership proof based on the plurality of digital signatures and the timestamps.

4. The data management program according to claim 3, wherein
the requesting the verifier server to verify a set membership proof includes:
acquiring the plurality of digital signatures and the time stamp from among a plurality of digital signatures accumulated by a signature server or a blockchain each time the credential is issued.

5. The data management program according to claim 4, wherein
the requesting the verifier server to verify a set membership proof includes:
requesting to verify validity of the digital signature based on whether or not a date and time of the time stamps is before a leakage date and time of a signature key for generating the digital signature.

6. The data management program according to claim 1, wherein
the disclosing includes:
displaying information of a plurality of credentials possessed by the user;
displaying a plurality of pieces of attribute information of the credential selected by the user from among the displayed plurality of credentials;
disclosing the attribute information that is selected by the user from among the plurality of pieces of attribute information and does not identify the user to the verifier server.

7. A data management method for performing a zero knowledge proof of a credential owned by a user comprising:
disclosing a commitment of a digital signature of the credential to a verifier server;
requesting the verifier server to verify a knowledge proof of the digital signature using the commitment;
transmitting, to the verifier server, a plurality of digital signatures including the digital signature of the credential; and
requesting the verifier server to verify a set membership proof in which one of the plurality of digital signatures is owned by the user.

8. A data management apparatus for performing a zero knowledge proof of a credential owned by a user comprising:
a control unit configured to perform a process of:
disclosing a commitment of a digital signature of the credential to a verifier server;
requesting the verifier server to verify a knowledge proof of the digital signature using the commitment;
transmitting, to the verifier server, a plurality of digital signatures including the digital signature of the credential; and
requesting the verifier server to verify a set membership proof in which one of the plurality of digital signatures is owned by the user.

9. A data management system for performing a zero knowledge proof of a credential owned by a user comprising:
a data management apparatus operated by a user includes a control unit configured to perform a process of:
disclosing a commitment of a digital signature of the credential to a verifier server;
requesting the verifier server to verify a knowledge proof of the digital signature using the commitment;
transmitting, to the verifier server, a plurality of digital signatures including the digital signature of the credential; and
requesting the verifier server to verify a set membership proof in which one of the plurality of digital signatures is owned by the user,
wherein the verifier server is configured to perform a process of:
verifying the knowledge proof of the digital signature using the commitment of the digital signature of the credential disclosed by the data management apparatus; and
verifying, using the commitment, the set membership proof for the plurality of digital signatures; and
returning a verification result to the data management apparatus.

10. The data management system according to claim 9 comprising:
an issuer server configured to assign the digital signature to the credential each time the credential is issued;
a signature server configured to receive the digital signature each time the credential is issued by the issuer server and accumulate and hold the digital signature and a time stamp,
wherein the data management apparatus acquires the plurality of digital signatures from the signature server and transmits the plurality of digital signatures to the verifier server, and
the verifier server verifies the set membership proof including validity of the time stamp based on the plurality of digital signatures including the digital signature of the credential owned by the user transmitted from the data management apparatus, and the digital signature and the time stamp acquired from the signature server.
